# EUROPÄISCHE PATENTSCHRIFT

(11) **EP 2 696 205 B1**
(45) Veröffentlichungstag und Bekanntmachung des Hinweises auf die Patenterteilung: **28.09.2016**
(21) Anmeldenummer: 13178313.6
(22) Anmeldetag: 29.07.2013
(51) Int. Cl.: G01N 35/02, G01N 35/04, G01N 35/00

(54) **Mikroplatten-Reader mit Deckelabheber für Mikroplatten**
Microplate reader with lid lifter for microplates
Lecteur de plaque microtitre avec lève-couvercle pour plaques microtitres

(30) Priorität: 09.08.2012 CH 13062012
(43) Veröffentlichungstag der Anmeldung: 12.02.2014
(60) Teilanmeldung: 16169209.0
(73) Patentinhaber: Tecan Trading AG, 8708 Männedorf (CH)
(72) Erfinder: Menges, Friedrich, 83471 Berchtesgaden (DE); Gebetsroither, Harald, 5082 Grödig (AT); Wenczel, Gyoergy, 5201 Seekirchen (AT)
(74) Vertreter: OK pat AG

(56) Entgegenhaltungen:
- EP-A1- 1 640 723
- WO-A1-93/08914
- DE-U1- 20 101 734
- US-A1- 2011 293 488

## Beschreibung

Die Erfindung betrifft einen Deckelabheber für Mikroplatten, der in einen Mikroplatten-Reader mit mindestens einer optischen Mess-/Detektions-Einrichtung eingebaut ist. Mikroplatten erlauben beispielsweise das Durchführen von biologischen oder biochemischen Versuchen, bei welchen eine grosse Anzahl von Proben parallel bearbeitet wird. Mikroplatten-Reader haben sich bei der optischen Auswertung von in Mikroplatten erzielten Versuchsresultaten vielfach bewährt.

Als Mikroplatte werden im Zusammenhang mit der vorliegenden Erfindung alle Multiwellplatten bezeichnet, die eine Vielzahl an Wells oder Behälter aufweisen, welche in einem Array angeordnet sind. Speziell bevorzugte Mikroplatten weisen zumindest annähernd die Masse und den Footprint einer Mikroplatte nach dem SBS Standard auf, wie dieser vom American National Standards Institute (ANSI) veröffentlicht wurde. Bekannt sind beispielsweise Mikroplatten, deren Wells mit einem Rundboden, Flachboden oder V-Boden ausgestattet sind. Dabei können die Wells als "normale Wells" oder auch als "Deep Wells" ausgebildet sein. Auch kegelstumpf- oder pyramidenstumpfförmige Wells sind an sich bekannt. Allen Mikroplatten mit den unterschiedlichsten Wellformen ist gemeinsam, dass sie eine normierte Grundfläche, also einen normierten Footprint" aufweisen, und dass der Achsabstand der jeweils in einem Array angeordneten Wells ebenfalls normiert ist. Dieser Achsabstand beträgt z.B. bei 24-Well (4 x 6) Platten 18 mm, bei 96-Well (8 x 12) Platten 9 mm, bei 384-Well (16 x 24) Platten 4.5 mm und bei 1536-Well (32 x 48) Platten 2.25 mm. Die Höhe einer Mikroplatte kann je nach Typ sehr stark variieren und beträgt typischerweise zwischen 10.4 mm (z.B. 1536 V-Boden Deep Well Platte) und 44 mm (z.B. 96 Well Masterblock^{®} von Greiner).

Werden biologische oder biochemische Versuche in Mikroplatten über eine längere Zeitdauer (während Stunden oder gar Tagen) und/oder bei gegenüber der Raumtemperatur erhöhten Temperaturen durchgeführt, tritt oft und typischerweise Verdunstung auf, die zu einer Volumenabnahme und Konzentrationsveränderung von Elektrolyten und Makromolekülen bis zum Eintrocknen der Proben führen kann. Aus diesem Grund werden die Mikroplatten vorzugsweise in einem separaten Inkubator prozessiert, wobei Temperatur und Luftfeuchte so geregelt sind, dass keine Verdunstung stattfindet. Nachteilig ist dabei, dass die Mikroplatten für Messungen händisch zwischen Inkubator und Reader hin- und her transferiert werden müssen. Diese Erörterung bezieht sich auf den Betrieb als Standalone-Reader; ist der Reader hingegen Teil eines Robotiksystems (Grössere Laboranlagen, insbesondere automatisierte Laborsysteme, umfassen meistens einen Roboter, der üblicherweise mit Pipettenspitzen für den Transport von Flüssigkeiten oder mit Greifern für den Transport von Labware wie z.B. Mikroplatten oder Probenröhrchen versehen ist. Als ein Beispiel für ein derartiges Laborsystem sei die Freedom EVO^{®} Liquid Handling Workstation des aktuellen Anmelders genannt), so übernimmt der Roboter dieses Systems den Transfer zwischen Reader und Mehrfach-Inkubator. Alternativ könnten die Mikroplatten im Reader selbst prozessiert werden mit dem Vorteil, dass zwischendurch und automatisch Messzyklen durchgeführt werden können. Es wäre jedoch in einem Robotersystem nachteilig, einen Reader mit einer einzigen Mikroplatte für Tage zu blockieren.

Standardmässig wird das Verdunsten von Probenflüssigkeit aus Mikroplatten dadurch bekämpft, dass die Mikroplatte mit einem Deckel abgedeckt wird, oder dass die Mikroplatte bzw. deren Wells mit selbstklebenden oder auflaminierten Folien verschlossen werden. Ein solches Abdecken oder Verschliessen bringt einige Nachteile mit sich, wie z.B.:
- die Verwendung eines robotisierten Injektors zum Zugeben von Agenzien in die Wells (z.B. zum Auslösen von Lumineszenzreaktionen in den Proben) ist nicht möglich;
- das Abdecken verringert die Gaszufuhr aus der Umgebung in die Wells, wodurch ein Sauerstoff- und/oder Kohlendioxid-Mangel in den Wells resultiert, der je nach Zelltyp das Wachstum der Zellen verlangsamt, die Prozessierungszeit verlängert und die maximal erreichbaren Zellkonzentrationen verringert;

- der Gasaustausch zwischen den Proben in den Wells und der Umgebung ist reduziert oder verunmöglicht, so dass sich unter Umständen schädliche Gaskonzentrationen im Luftraum der Wells über den Proben (z.B. bei Zellkulturen oder zellbasierten Versuchen) bilden können;
- aus den Proben verdunstete Flüssigkeit kann an der Unterseite des Deckels oder der Selbstklebefolie kondensieren, so dass der dadurch entstehende Beschlag zu fehlerhaften optischen Messungen (z.B. der Absorbance) führt;
- der Deckel und die Selbstklebefolie verhindern oder zumindest behindern das optische Erfassen von Fluoreszenz in den Proben mittels der bevorzugten Top-Detektion (also von oben);
- der Deckel und die Selbstklebefolie verunmöglichen das optische Erfassen von Lumineszenz in den Proben mittels Top-Detektion.

Bisher wurde solchen Problemen wenigstens teilweise begegnet, indem vor dem Einlegen einer Mikroplatte in den Mikroplatten-Reader der Deckel oder die Selbstklebefolie entfernt und nach dem Beenden des Ausmessens bzw. der optischen Auswertung der Platte im Reader der Deckel oder die Selbstklebefolie wieder montiert wurde. Es versteht sich von selbst, dass derartige Manipulationen an mit heiklen Proben beschickten Mikroplatten umständlich und für die Proben möglicherweise sogar extrem schädlich sein können. Insbesondere können sich beim Wiedermontieren von bereits verwendeten Selbstklebefolien Kreuzkontaminationen ergeben. Dies ist insbesondere dann der Fall, wenn im Verlauf eines mehrtägigen Versuchsprotokolls dieselbe Mikroplatte mehrmals und zu unterschiedlichen Zeiten im Mikroplatten-Reader untersucht werden soll, auch sind Unfälle auf dem Weg zwischen dem Ort des Abnehmens des Deckels oder der Selbstklebefolie und dem Ort des Mikroplatten-Readers nicht ausgeschlossen.

Lösungen zum robotisierten Abnehmen von Mikroplattendeckeln sind aus dem Stand der Technik bekannt:

Das Dokument US 2011/0293488 A1 offenbart beispielsweise einen spezialisierten Deckelmanipulier-Apparat zum automatischen Abheben/Auflegen eines Deckels von einer bzw. auf eine Mikroplatte. Der Apparat umfasst eine horizontal verfahrbare Mikroplattenauflage, die aus dem Apparat ausgefahren und mit einer abgedeckten Mikroplatte belegt werden kann. Nach dem Einfahren der Mikroplatte in den Apparat wird eine horizontal und vertikal verfahrbare Deckelpressvorrichtung über der Mikroplatte platziert und abgesenkt. Nach dem Entriegeln des Spezialdeckels von der Mikroplatte wird der Deckel mit einem Saugnapf oder alternative mit einem Robotergreifer abgehoben. Die so abgedeckte Mikroplatte wird anschliessend mit der Mikroplattenauflage aus dem Apparat ausgefahren. Die Aufgabe des Deckel-Abnehmens bzw. Auflegens wird mit recht grossem Aufwand gelöst. Zudem bedingt das Verwenden dieses spezialisierten Deckelmanipulier-Apparats ein Verändern bzw. Anpassen der zu verwendenden Mikroplatten und das Verwenden von Spezialdeckeln.

Das Dokument US 7,666,362 B2 beschreibt das Herstellen und Verwenden einer speziellen Mikroplatten/Deckel-Kombination, die mittels eines Robotergreifers handhabbar ist. Obwohl der Vorteil des Abdeckens der Multiwellplatte mit dem Deckel erkannt (Reduzieren der Proben-Verdampfung) und dem Fachmann das robotisierte Abnehmen zumindest nahegelegt wird, muss der Anwender diese speziellen Mikroplatten und Deckel verwenden und sowohl auf Standardmikroplatten als auch auf Standardmikroplattendeckel verzichten.

Das Dokument EP 1 192 995 A2 offenbart einen speziellen, eine Dichtung umfassenden Deckel für Standardmikroplatten und einen Robotergreifer zum Halten der Mikroplatte und zum wiederholten Entfernen und Wiederaufsetzen dieses Spezialdeckels. Der Deckel übt einen Federdruck auf die Dichtung aus, so dass diese an der Mikroplatte dichtend anschliesst. Entsprechend dieser speziellen Deckelkonstruktion ist der Robotergreifer zum Lösen der federnden Teile des Deckels ausgebildet und recht kompliziert aufgebaut. Der Anwender kann zwar Standardmikroplatten verwenden, muss jedoch auf Standardmikroplattendeckel verzichten.

Das Dokument US 6,449,827 B1 offenbart einen Saugmechanismus zum Festhalten einer Mikroplatte während der Zeit des Abnehmens eines Mikroplattendeckels mittels eines robotisierten Greifmechanismus.

Das Dokument WO 93/08914 A1 offenbart ein System zum Aufbewahren von zugedeckten Mikroplatten und zum Abheben des Deckels von diesen Mikroplatten. Das Einsetzen der Mikroplatten mit Deckel in das System muss manuell ausgeführt werden. Dabei beaufschlagen zwei Federn des Systems den Mikroplattendeckel während und nach dem Einsetzen einer zugedeckten Mikroplatte. Beim automatisierten Herausnehmen einer Mikroplatte aus dem System schwenkt der Mikroplattendeckel einseitig dem Federdruck folgend gegen unten und wird in dieser Schräglage im System gehalten. Beim automatisierten Wiedereinsetzen einer Mikroplatte in das System, schwenkt der Mikroplattendeckel einseitig entgegen dem Federdruck gegen oben und wird in horizontaler Lage zusammen mit der nun zugedeckten Mikroplatte im System gehalten. Das Entnehmen der zugedeckten Mikroplatten mit Deckel aus dem System erfolgt wieder manuell.

Das Dokument DE 201 01 734 U1 offenbart einen Mikroplatten- oder Mikroplattendeckel-Heber, der mit einem oder zwei Elektromagneten ausgerüstet ist. Diese Elektromagnete interagieren mit einem oder zwei Haltemitteln, die auf der Mikroplatte oder auf dem Mikroplattendeckel angeordnet sind, und die das Magnetfeld der Elektromagnete leiten. Die Distanz zwischen zwei Haltemitteln entspricht der Distanz zwischen zwei Elektromagneten, weshalb eine präzise Ausrichtung des Mikroplatten- oder Mikroplattendeckel-Hebers in Bezug auf eine aufzuhebende Mikroplatte bzw. einen aufzuhebenden Mikroplattendeckel zwingend ist.

Auch wenn teilweise die Möglichkeit offenbart wurde Standardmikroplatten und eventuell sogar Standardmikroplattendeckel zu verwenden, so bieten alle bekannten Dokumente aus dem Stand der Technik keine Lösung für das Problem des oft heiklen Wegs der Mikroplatte (und insbesondere der ungedeckten Proben) für die Zeit zwischen dem Deckelabheben und der optischen Analyse der Proben im Mikroplatten-Reader.

Es ist deshalb eine Aufgabe der vorliegenden Erfindung, eine alternative Vorrichtung und ein alternatives Verfahren vorzuschlagen, das die aus dem Stand der Technik bekannten Nachteile eliminiert.

Diese Aufgabe wird gemäss einem ersten Aspekt mit einem Mikroplatten-Reader entsprechend den Merkmalen des unabhängigen Anspruchs 1 gelöst. Dabei umfasst dieser Mikroplatten-Reader mindestens eine optische Mess-/Detektions-Einrichtung, ein Gehäuse, eine Mikroplattenauflage und eine Bewegungseinheit. Die Bewegungseinheit ist zum Bewegen der Mikroplattenauflage innerhalb des Gehäuses in zumindest einer im Wesentlichen horizontalen Richtung ausgebildet.

Der Mikroplatten-Reader umfasst eine integrierte, innerhalb des Gehäuses angeordnete Deckelhaltevorrichtung zum Abheben eines Mikroplattendeckels von einer auf der Mikroplattenauflage positionierten Mikroplatte und zum Auflegen eines Mikroplattendeckels auf eine Mikroplatte. Diese Deckelhaltevorrichtung ist zur Bewegung des Mikroplattendeckels und/oder die Mikroplattenauflage ist zur Bewegung der Mikroplatte in jeweils einer zumindest annähernd vertikalen Richtung ausgebildet. Der erfindungsgemässe Mikroplatten-Reader ist dadurch gekennzeichnet, dass die Bewegungseinheit zum Bewegen der Mikroplattenauflage aus dem Gehäuse heraus und in das Gehäuse hinein in zumindest einer im Wesentlichen horizontalen Richtung ausgebildet ist, und dass die Deckelhaltevorrichtung als Magnetheber ausgebildet ist und ein Array von Dauermagneten oder ein elektromagnetisches Array umfasst, wobei jeder anzuhebende und aufzusetzende Mikroplattendeckel magnetisierbares Material umfasst.

Diese Aufgabe wird gemäss einem zweiten Aspekt mit einem Verfahren zum optischen Ausmessen von Proben in Wells einer mit einem Mikroplattendeckel versehenen Mikroplatte in einem derartigen Mikroplatten-Reader entsprechend den Merkmalen des unabhängigen Anspruchs 9 gelöst. Der Mikroplatten-Reader umfasst mindestens eine optische Mess-/Detektions-Einrichtung, ein Gehäuse, eine Mikroplattenauflage und eine Bewegungseinheit. Die Bewegungseinheit ist zum Bewegen der Mikroplattenauflage innerhalb des Gehäuses in zumindest einer im Wesentlichen horizontalen Richtung ausgebildet. Der Mikroplatten-Reader umfasst eine integrierte, innerhalb des Gehäuses angeordnete Deckelhaltevorrichtung zum Abheben eines Mikroplattendeckels von einer auf der Mikroplattenauflage positionierten Mikroplatte und zum Auflegen eines Mikroplattendeckels auf eine Mikroplatte. Diese Deckelhaltevorrichtung ist zur Bewegung des Mikroplattendeckels und/oder die Mikroplattenauflage ist zur Bewegung der Mikroplatte in jeweils einer zumindest annähernd vertikalen Richtung ausgebildet. Die Bewegungseinheit ist zum Bewegen der Mikroplattenauflage aus dem Gehäuse heraus und in das Gehäuse hinein in zumindest einer im Wesentlichen horizontalen Richtung ausgebildet. Die Deckelhaltevorrichtung ist als Magnetheber ausgebildet und umfasst ein Array von Dauermagneten oder ein elektromagnetisches Array. Jeder anzuhebende und aufzusetzende Mikroplattendeckel umfasst magnetisierbares Material.

Das erfindungsgemässe Messverfahren umfasst dabei die folgenden Schritte:
(a) Platzieren einer mit einem Mikroplattendeckel abgedeckten Mikroplatte auf der Mikroplattenauflage des Mikroplatten-Readers;
(b) Einziehen der Mikroplattenauflage und der abgedeckten Mikroplatte mit der Bewegungseinheit in das Gehäuse des Mikroplatten-Readers;
(c) Abheben des Mikroplattendeckels von der auf der Mikroplattenauflage positionierten Mikroplatte mit der Deckelhaltevorrichtung;
(d) Ausmessen der Mikroplatte mit abgehobenem Mikroplattendeckel mit der mindestens einen optischen Mess-/Detektions-Einrichtung;
(e) Wiederauflegen des Mikroplattendeckels auf der auf der Mikroplattenauflage positionierten Mikroplatte unter Verwendung der im Mikroplatten-Reader integrierten Deckelhaltevorrichtung; und
(f) Ausfahren der Mikroplattenauflage und der abgedeckten Mikroplatte mit der Bewegungseinheit aus dem Gehäuse des Mikroplatten-Readers.

Weitere bevorzugte und erfinderische Merkmale ergeben sich aus den jeweils abhängigen Ansprüchen.

Vorteile des erfindungsgemässen Mikroplatten-Readers bzw. des erfindungsgemässen Messverfahrens umfassen:
- Alle bekannten Messmodi (z.B. Absorbance, Fluoreszenz, Lumineszenz) können an deckellosen bzw. abgedeckten Mikroplatten angewendet werden, während ausserhalb der Messzeiten die Mikroplatte mit einem Deckel abgedeckt werden kann;
- Es können Standard-Mikroplatten und (eventuell geringfügig modifizierte) Standard-Mikroplattendeckel verwendet werden;
- Bei Zellbasierten Versuchen kann der Verdunstungsschutz durch Abdecken mit dem Anbieten von genügendem Gasaustausch durch kurzzeitiges Abdecken der Mikroplatten kombiniert werden;
- Das automatisierte Injizieren von (z.B. Lumineszenz oder anderen Reaktionen auslösenden) Agenzien ist währen des Durchführens von Versuchen in deckelgeschützten Mikroplatten möglich.

Ein beispielhafter erfindungsgemässer Mikroplatten-Reader wird anhand von schematischen Skizzen gezeigt. Diese Skizzen sollen ausgewählte Ausführungsformen des erfindungsgemässen Mikroplatten-Readers dokumentieren, aber den Umfang der vorliegenden Erfindung nicht einschränken. Dabei zeigt:
- Fig. 1: einen Vertikalschnitt durch einen Mikroplatten-Reader mit ausgefahrener Bewegungseinheit und Mikroplattenauflage, nach dem manuellen oder robotisierten Positionieren einer abgedeckten Mikroplatte auf der Mikroplattenauflage;
- Fig. 2: einen Vertikalschnitt durch einen Mikroplatten-Reader mit eingefahrener Bewegungseinheit und Mikroplattenauflage, vor dem Abheben des Mikroplattendeckels mit einer integrierten Deckelhaltevorrichtung;
- Fig. 3: einen Vertikalschnitt durch einen Mikroplatten-Reader mit eingefahrener Bewegungseinheit und Mikroplattenauflage, beim Abheben des Mikroplattendeckels mit einem Magnetheber der integrierten Deckelhaltevorrichtung;
- Fig. 4: einen Vertikalschnitt durch einen Mikroplatten-Reader mit eingefahrener Bewegungseinheit und Mikroplattenauflage; die Mikroplatte mit abgehobenem Mikroplattendeckel ist bereit zum Messen;
- Fig. 5: einen Vertikalschnitt durch einen Mikroplatten-Reader mit eingefahrener Bewegungseinheit und Mikroplattenauflage beim optischen Ausmessen der Mikroplatte mit abgehobenem Mikroplattendeckel und mit korrigiertem Arbeitsabstand zur Mess-/Detektions-Einrichtung;
- Fig. 6: einen Vertikalschnitt durch einen Mikroplatten-Reader mit eingefahrener Bewegungseinheit und Mikroplattenauflage beim Auflegen des Mikroplattendeckels auf die Mikroplatte;
- Fig. 7: einen Vertikalschnitt durch einen Mikroplatten-Reader mit eingefahrener Bewegungseinheit und Mikroplattenauflage beim Wegbewegen der wieder abgedeckten Mikroplatte vom Magnetheber der integrierten Deckelhaltevorrichtung;
- Fig. 8: einen Vertikalschnitt durch einen Mikroplatten-Reader mit ausgefahrener Bewegungseinheit und Mikroplattenauflage, beim manuellen oder robotisierten Wegnehmen der wieder abgedeckten Mikroplatte von der Mikroplattenauflage;
- Fig. 9: Aufsichten auf mit selbstklebender Eisenfolie modifizierte Standard-Mikroplattendeckel, wobei
Fig. 9A zwei schmale, querliegende und extrem positionierte Streifen auf dem Deckel für eine 96-Well Mikroplatte;
Fig. 9B zwei willkürlich platzierte, zumindest annähernd dreieckige Stücke auf dem Deckel für eine 24-Well Mikroplatte;
Fig. 9C zwei willkürlich zwischen den Wells platzierte, zumindest annähernd quadratische Stücke auf dem Deckel für eine 6-Well Mikroplatte; und
Fig. 9D zwei Alternativen von zumindest annähernd rechteckigen Stücken auf dem Deckel für eine beliebige Standard-Mikroplatte zeigt;
- Fig. 10: eine 3D-Ansicht der Bewegungseinheit mit auf der Mikroplattenauflage positionierter Mikroplatte mit aufgesetztem Mikroplattendeckel;
- Fig. 11: eine leicht vergrösserte 3D-Ansicht der leeren Mikroplattenauflage der Bewegungseinheit bei einer Übergabestation und in der entsprechenden Vergrösserung eine 3D-Ansicht einer 96-Well Mikroplatte ohne Mikroplattendeckel.

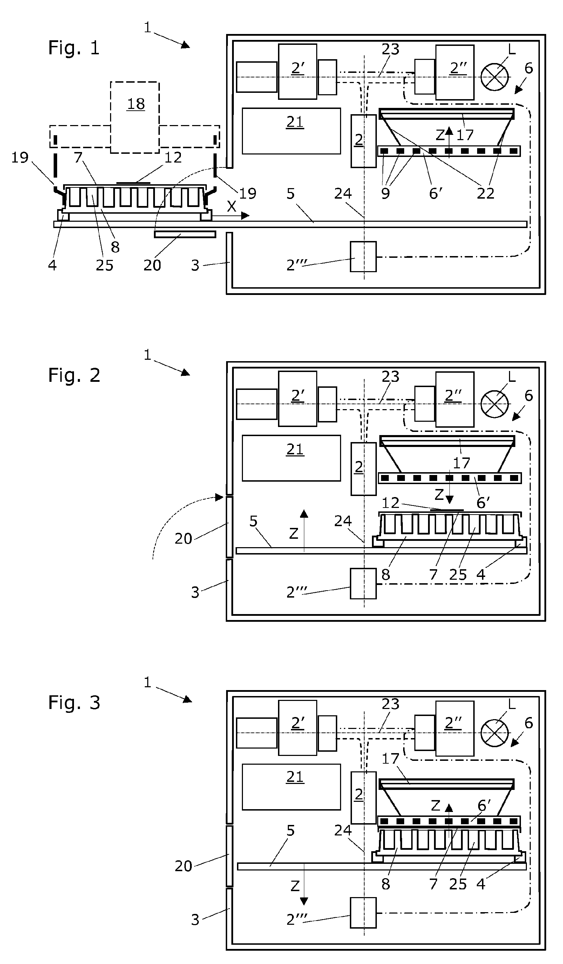

Die Figur 1 zeigt einen Vertikalschnitt durch einen Mikroplatten-Reader 1 mit ausgefahrener Bewegungseinheit 5 und Mikroplattenauflage 4, nach dem manuellen oder robotisierten Positionieren einer abgedeckten Mikroplatte 8 auf der Mikroplattenauflage 4. Der Mikroplatten-Reader 1 umfasst eine Steuerung 21 zur Überwachung und Kontrolle der Funktionen des Readers und der Bewegungseinheit 5.

Der hier gezeigte Mikroplatten-Reader 1 umfasst mindestens eine optische Mess-/ Detektions-Einrichtung 2. Der Mikroplatten-Reader 1 umfasst zudem ein Gehäuse 3, eine Mikroplattenauflage 4 und eine Bewegungseinheit 5, wobei die Bewegungseinheit 5 zum Bewegen der Mikroplattenauflage 4 aus dem Gehäuse 3 heraus, in das Gehäuse 3 hinein und innerhalb des Gehäuses 3 in zumindest einer im Wesentlichen horizontalen Richtung ausgebildet ist. Das Gehäuse 3 ist vorzugsweise optisch gegenüber der Umgebung abgedichtet. Das Gehäuse kann auch in Bezug auf die Temperatur, die Gaszusammensetzung und deren relative Feuchtigkeit gegenüber der Umgebung isoliert und damit als Klimakammer ausgebildet sein.

Diese optische Mess-/Detektions-Einrichtung 2 kann auch als "Messkopf" bezeichnet werden und ortstreu fixiert, also unbeweglich angeordnet sein. In diesem Fall ist die Bewegungseinheit 5 zum Fokussieren der optischen Mess-/Detektions-Einrichtung 2 zusätzlich höhenbeweglich ausgebildet. Alternativ kann die optische Mess-/Detektions-Einrichtung 2 höhenverschiebbar angeordnet sein, so dass sie beispielsweise von einer Parkposition in eine Messposition gefahren werden kann, wobei ein solcher Messkopf 2 vorzugsweise zumindest einen feinen Z-Antrieb umfasst, der zum Fokussieren der optischen Mess-/Detektions-Einrichtung 2 ausgebildet ist. Eine weitere Alternative umfasst das Ausbilden einer höhenbeweglichen optischen Mess-/ Detektions-Einrichtung 2 und einer höhenbeweglichen Bewegungseinheit 5; zum Fokussieren der optischen Mess-/Detektions-Einrichtung 2 wird dann vorzugsweise der Messkopf 2 mit einem feinen Z-Antrieb zum Fokussieren der optischen Mess-/Detektions-Einrichtung ausgestattet.

Der Mikroplatten-Reader 1 umfasst zudem eine integrierte, innerhalb des Gehäuses 3 angeordnete Deckelhaltevorrichtung 6 zum Abheben eines Mikroplattendeckels 7 von einer auf der Mikroplattenauflage 4 positionierten Mikroplatte 8 und zum Auflegen eines Mikroplattendeckels 7 auf eine Mikroplatte 8. Vorzugsweise ist die Deckelhaltevorrichtung 6 zum Abheben eines Mikroplattendeckels 7 von einer auf der Mikroplattenauflage 4 positionierten Mikroplatte 8, zum Halten dieses Mikroplattendeckels 7 während dem optischen Ausmessen der Mikroplatte 8 und zum Auflegen desselben Mikroplattendeckels 7 auf dieselbe Mikroplatte 8 ausgebildet. Alternativ kann vorgesehen sein, dass die Deckelhaltevorrichtung 6 derart ausgebildet ist, dass mit ihr der Mikroplattendeckel 7 während dem Ausmessen der Mikroplatte 8 innerhalb des Gehäuses 3 des Mikroplatten-Readers 1 abgelegt werden kann.

Zum Wegbewegen des Mikroplattendeckels 7 von der Mikroplatte 8 können die Deckelhaltevorrichtung 6 und/oder die Mikroplattenauflage 4 in jeweils einer zumindest annähernd vertikalen Richtung ausgebildet sein. Somit wird entweder der Mikroplattendeckel 7 von der Mikroplatte 8 abgehoben oder die Mikroplatte 8 gegenüber dem Mikroplattendeckel 7 abgesenkt. Als dritte Möglichkeit bietet sich ein Auseinanderbewegen von Mikroplattendeckel 7 und Mikroplatte 8 an.

Der in den Figuren 1 bis 8 gezeigte, beispielhafte Mikroplatten-Reader 1 umfasst eine Deckelhaltevorrichtung 6, die als Magnetheber 6' ausgebildet ist. Diese Deckelhaltevorrichtung 6 umfasst ein Array von Dauermagneten 9. Diese Deckelhaltevorrichtung 6 ist hier mit biegeelastischen oder biegeschlaffen Elementen 22 an einer Tragvorrichtung 17 befestigt. Diese biegeelastischen oder biegeschlaffen Elemente 22 sind (wie gezeigt) vorzugsweise so angebracht, dass deren Befestigungs-orte an der Tragvorrichtung 17 weiter auseinander liegen als deren Befestigungsorte am Magnetheber 6'. Diese Anordnung ergibt automatisch eine wirksame Selbstzentrierung des Magnethebers 6' und dämpft zudem effizient dessen Eigenschwingungen. Die Tragvorrichtung 17 muss dementsprechend ausladend konstruiert sein. Diese biegeelastischen oder biegeschlaffen Elemente 22 sind vorzugsweise als Metall umfassende Leinen oder Schnüre ausgebildet. Die gezeigte Tragvorrichtung 17 ist höhenverstellbar ausgebildet, wobei allfällige Bewegungen jeweils mit einem Richtungspfeil und einem "Z" angezeigt werden.

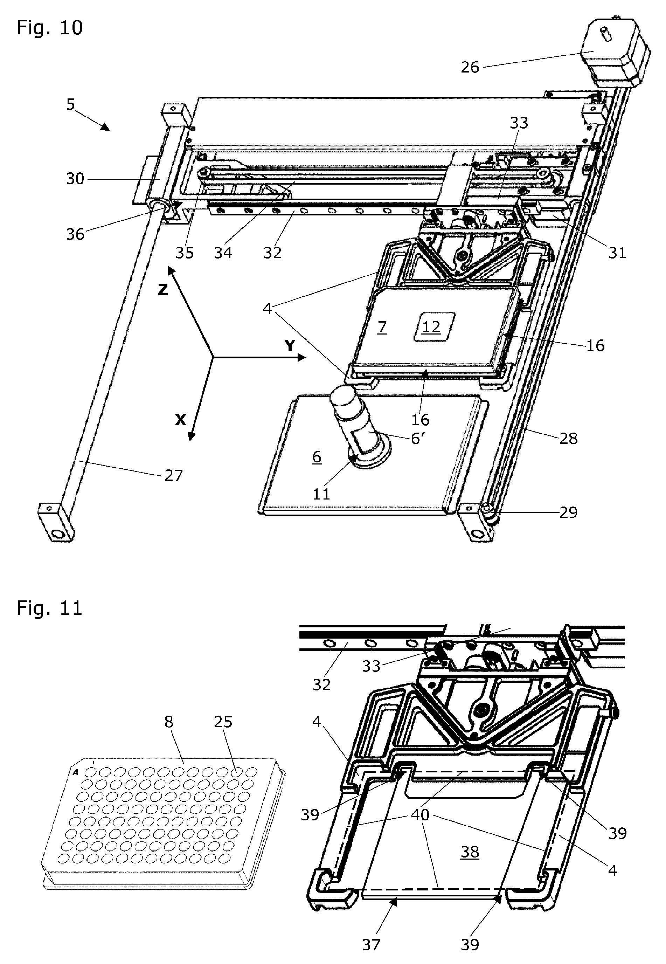

Alternativ kann die Deckelhaltevorrichtung 6 ein elektromagnetisches Array (nicht gezeigt) oder in einer hier nicht beanspruchten Alternative einen einzelnen, schaltbaren Permanentmagneten 11 umfassen (vgl. Fig. 10). In jedem dieser Fälle ist bevorzugt, dass jeder anzuhebende und aufzusetzende Mikroplattendeckel 7 magnetisierbares Material 12 umfasst. Vorzugsweise ist das magnetisierbare Material 12 ausgewählt aus einer Gruppe, die selbstklebende Metallfolien, aufgebrachte metallische Lacke, eingeformte metallische Splitter oder metallische Körner sowie mit Kunststoffen umformte oder hinterspritzte Metallplatten oder Metallfolien umfasst. Die Metalle sind vorzugsweise ausgewählt aus der Gruppe, die Eisen, Nickel, Kobalt und deren Legierungen sowie Legierungen dieser Metalle mit nichtmagnetisierbaren Metallen umfasst.

Der in Fig. 1 gezeigte, beispielhafte Mikroplatten-Reader 1 umfasst zudem eine im Wesentlichen horizontal angeordnete optische Achse 23 und eine im Wesentlichen vertikal angeordnete Detektionsachse 24. Auf der optischen Achse 23 und oberhalb der Bewegungseinheit 5 mit der Mikroplattenauflage 4 angeordnet umfasst dieser Mikroplatten-Reader 1 eine Detektionsoptik 2', eine Lichtquelle L und eine erste Anregungsoptik 2". Zudem umfasst dieser Mikroplatten-Reader 1 eine zweite Anregungsoptik 2'", die unterhalb der Bewegungseinheit 5 mit der Mikroplattenauflage 4 und auf der Detektionsachse 24 angeordnet ist. Ebenfalls auf der Detektionsachse 24 aber oberhalb Bewegungseinheit 5 mit der Mikroplattenauflage 4 ist der Messkopf 2, d.h. die optische Mess-/Detektions-Einrichtung angeordnet. Die einzelnen optischen Elemente 2,2',2",2"' sind vorzugsweise mittels optischen Glasfasern miteinander verbunden, was hier durch strichpunktierte bzw. gestrichelte Linien schematisch angedeutet ist (ohne notwendigerweise den besten oder tatsächlichen Verbindungsweg dazustellen).

Zum Ausfahren der Bewegungseinheit 5 mit der Mikroplattenauflage 4 aus dem Gehäuse 3 des Mikroplatten-Readers 1 wurde hier eine Türe 20 nach unten klappend geöffnet. Anstelle einer nach unten aufklappenden Türe 20 kann beispielsweise auch eine seitlich verschiebbare Türe 20 vorgesehen sein (nicht gezeigt). Diese alternative Anordnung der geöffneten Türe 20 erleichtert das Aufnehmen einer zu prozessierenden Mikroplatte von einer vor der Türe 20 platzierten Übergabestation 37 (vgl. Fig. 11). Diese alternative Anordnung der geöffneten Türe 20 erleichtert ebenso das Abgeben einer bereits prozessierten Mikroplatte an diese vor der Türe 20 platzierte Übergabestation 37 (vgl. Fig. 11). Eine weitere alternative Anordnung der geöffneten Türe besteht beispielsweise darin, dass sich die als Klappe gefertigte Türe 20 zum Öffnen nach innen unter den Plattentransport zurückzieht. Das Ablegen der Mikroplatte 8 auf der Mikroplattenauflage 4 bzw. das Aufnehmen der Mikroplatte 8 von der Mikroplattenauflage 4 kann wie gezeigt durch einen mit Greiferfingern 19 ausgestatteter Roboter 18 aber auch manuell erfolgen.

In einer ersten alternativen, nicht erfindungsgemässen Ausgestaltung kann die Deckelhaltevorrichtung 6 als Saugnapfheber 6" ausgebildet sein (nicht gezeigt) und umfasst zumindest einen mit einer Unterdruckquelle 13 verbindbaren Saugnapf 14. Diese Unterdruckquelle 13 ist vorzugsweise im Gehäuse 3 des Mikroplatten-Readers 1 angeordnet; sie kann aber z.B. aus Platzgründen auch ausserhalb des Mikroplatten-Readers 1 angeordnet sein. In einer zweiten alternativen, nicht erfindungsgemässen Ausgestaltung kann die Deckelhaltevorrichtung 6 als Greifer 6"' ausgebildet sein (nicht gezeigt) und umfasst zumindest zwei Greiferfinger 15 zum Beaufschlagen von Seitenflächen 16 eines Mikroplattendeckels 7.

Entsprechend einer bevorzugten Ausführungsvariante ist die die Deckelhaltevorrichtung 6 zum Ausführen einer Hebe- und Senk-Bewegung ausgebildet. Entsprechend einer alternativen Ausführungsvariante ist die die Deckelhaltevorrichtung 6 ortstreu unbeweglich angeordnet, dann muss jedoch die Bewegungseinheit 5 zum Ausführen einer Hebe- und Senk-Bewegung der Mikroplattenauflage 4 ausgebildet sein.

Entsprechend einer ebenfalls bevorzugten Ausführungsvariante ist die die optische Mess-/Detektions-Einrichtung 2, also der Messkopf 2, ortstreu unbeweglich angeordnet. Es ist ebenfalls bevorzugt, die Bewegungseinheit 5 zum Ausführen von Bewegungen der Mikroplattenauflage 4 in den X-, Y, und Z-Richtungen eines kartesischen Koordinatensystems auszubilden.

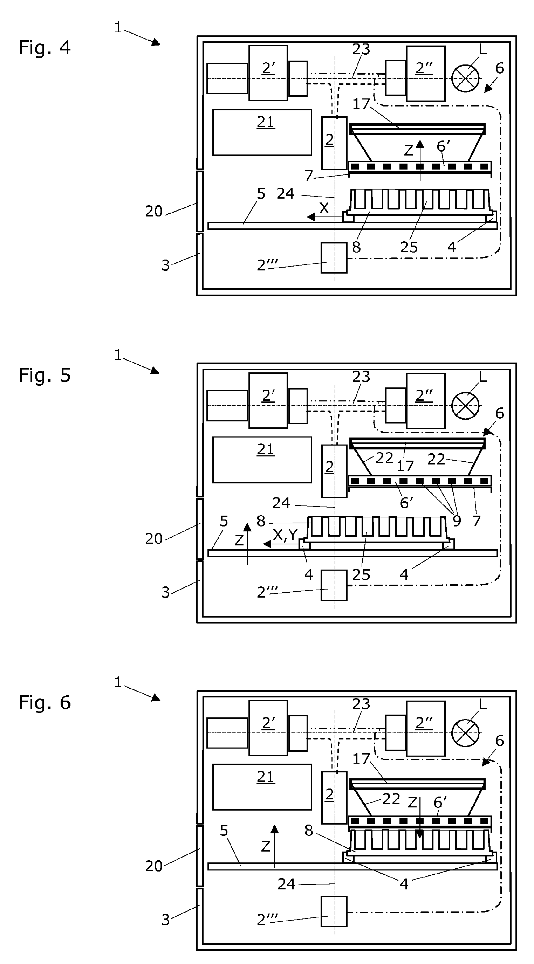

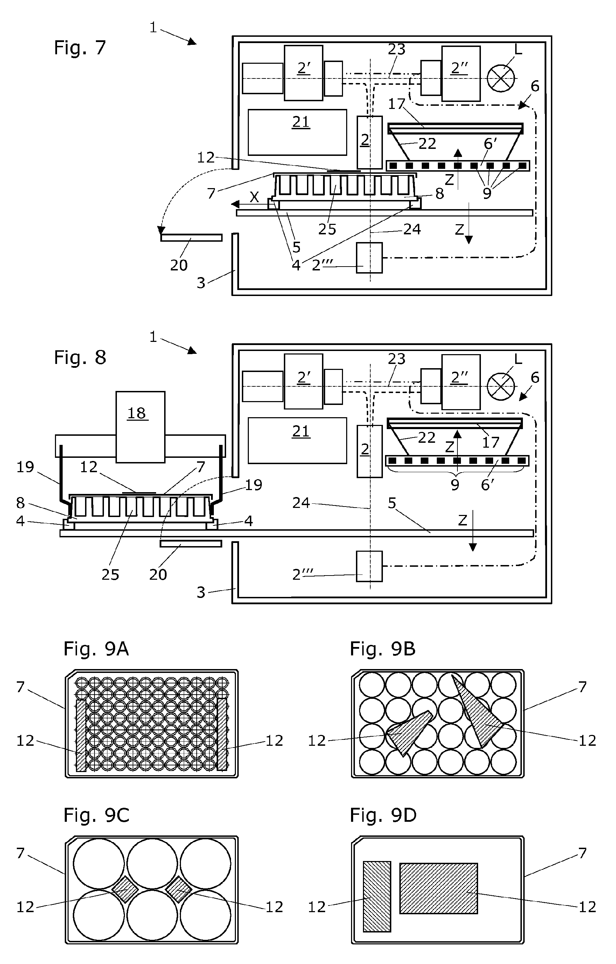

Ein beispielhaftes Verfahren zum optischen Ausmessen von Proben in Wells einer mit einem Mikroplattendeckel 7 versehenen Mikroplatte 8 in einem Mikroplatten-Reader 1 soll nun anhand der Figuren 1 bis 8 näher erläutert werden. Dieses Verfahren zum Ausmessen einer Mikroplatte 8 wird vorzugsweise in einem Mikroplatten-Reader 1 durchgeführt, der mindestens eine optische Mess-/Detektions-Einrichtung 2, ein Gehäuse 3, eine Mikroplattenauflage 4 und eine Bewegungseinheit 5 umfasst. Vorzugsweise ist die Bewegungseinheit 5 zum Bewegen der Mikroplattenauflage 4 aus dem Gehäuse 3 heraus, in das Gehäuse 3 hinein und innerhalb des Gehäuses 3 in zumindest einer im Wesentlichen horizontalen X-Richtung ausgebildet. Das erfindungsgemässe Verfahren ist durch gekennzeichnet, dass es die folgenden Schritte umfasst:
a) Das Platzieren einer mit einem Mikroplattendeckel 7 abgedeckten Mikroplatte 8 auf der Mikroplattenauflage 4 des Mikroplatten-Readers 1. Dies passiert gerade in der Figur 1. Vorzugsweise ist die Türe 20 des Mikroplatten-Readers 1 so gross, dass alle nur erdenklichen Mikroplattenformate mit der Bewegungseinheit 5 in den Mikroplatten-Reader 1 eingeschleust werden können.
b) Das Einziehen der Mikroplattenauflage 4 und der abgedeckten Mikroplatte 8 mit der Bewegungseinheit 5 in das Gehäuse 3 des Mikroplatten-Readers 1. Dies wurde in der Figur 2 soeben beendet und die Türe 20 geschlossen. Vorzugsweise sind alle Einbauten des Mikroplatten-Readers 1 so weit oberhalb der Bewegungseinheit 5 und der Mikroplattenauflage 4 angeordnet, dass alle nur erdenklichen Mikroplattenformate mit der Bewegungseinheit 5 im Mikroplatten-Reader 1 bewegt werden können.
c) Das Abheben des Mikroplattendeckels 7 von der auf der Mikroplattenauflage 4 positionierten Mikroplatte 8 mit einer im Mikroplatten-Reader 1 integrierten und innerhalb des Gehäuses 3 angeordnete Deckelhaltevorrichtung 6 wird in der Fig. 2 vorbereitet, indem die Mikroplattenauflage 4 mit der noch abgedeckten Mikroplatte 8 im Aufnahmebereich der Deckelhaltevorrichtung 6 platziert wird. Anschliessend wird die Deckelhaltevorrichtung 6 abgesenkt und/oder die Bewegungseinheit 5 mit der Mikroplattenauflage 4 angehoben, bis die Deckelhaltevorrichtung 6 den Mikroplattendeckel 7 kontaktiert, was in der Figur 3 der Fall ist. Dieses Kontaktieren wird hier mittels eines magnetisierbaren Materials 12 gewährleistet, welches beispielhaft in Form einer Selbstklebeeisenfolie auf dem Mikroplattendeckel 7 aufgebracht worden war (vgl. Fig. 1). Endlich wird die Deckelhaltevorrichtung 6 angehoben und/oder die Bewegungseinheit 5 mit der Mikroplattenauflage 4 abgesenkt, so dass die Mikroplatte 8 nun ohne Mikroplattendeckel 7 zum optischen Ausmessen der Proben in den Wells 25 bereit ist (vgl. Fig. 4). Alternativ zur gezeigten Vorgehensweise mit einer als Magnetheber 6' ausgebildeten Deckelhaltevorrichtung 6 kann der Mikroplattendeckel 7 mit einer als Saugnapfheber 6" oder als Greifer 6'" ausgebildeten Deckelhaltevorrichtung 6 abgehoben werden.
d) Das optische Ausmessen der Mikroplatte 8 mit abgehobenem Mikroplattendeckel 7 mit der mindestens einen optischen Mess-/Detektions-Einrichtung 2 erfolgt nun nach dem schrittweisen Verfahren der Mikroplatte 8 in der im Wesentlichen horizontalen X-Richtung und Y-Richtung, wobei jedes zu messende Well 25 in die Detektionsachse 24 des Mikroplatten-Readers 1 bewegt wird. Der optimale Arbeitsabstand zwischen Mikroplatte 8 und Messkopf 2 kann durch das Bewegen von Mikroplatte 8 und/oder Messkopf 2 in einer im Wesentlichen vertikalen Z-Richtung eingestellt werden (vgl. Fig. 5). Der Mikroplattendeckel 7 kann während dem Ausmessen der Mikroplatte 8 mit der Deckelhaltevorrichtung 6 innerhalb des Gehäuses 3 des Mikroplatten-Readers 1 gehalten oder im Gehäuse 3 abgelegt werden.
e) Das Wiederauflegen des Mikroplattendeckels 7 auf der auf der Mikroplattenauflage 4 positionierten Mikroplatte 8 erfolgt unter Verwendung der im Mikroplatten-Reader 1 integrierten Deckelhaltevorrichtung 6 (vgl. Fig. 6). Zu diesem Zweck werden Mikroplatte 8 und Deckelhaltevorrichtung 6 so gegen einander bewegt, dass der Mikroplattendeckel 7 korrekt auf die Mikroplatte 8 aufgesetzt wird. Im Fall der aktuellen Verwendung eines Magnethebers 6' mit einem Array von Dauermagneten 9 als Deckelhaltevorrichtung 6 und mit einer Selbstklebeeisenfolie 12 auf dem Mikroplattendeckel 7 wird der Mikroplattendeckel 7 von der Deckelhaltevorrichtung 6 dadurch getrennt, dass die Mikroplatte 8 mit aufgelegtem Mikroplattendeckel 7 mit der Bewegungseinheit 5 horizontal verschoben wird (vgl. Fig. 7). Auf diese Weise wird der Mikroplattendeckel 7 von der Unterseite der Deckelhaltevorrichtung 6 abgestreift und bleibt auf der Mikroplatte 8 liegen.
f) Zum Ausfahren der Mikroplattenauflage 4 und der abgedeckten Mikroplatte 8 mit der Bewegungseinheit 5 aus dem Gehäuse 3 des Mikroplatten-Readers 1 wird die Türe 20 wieder geöffnet (vgl. Fig. 8). Von der ausgefahrenen Mikroplattenauflage 4 kann die abgedeckte Mikroplatte 8 mittels eines mit Greiferfingern 19 ausgestatteten Roboters 18 oder von Hand abgehoben werden. Ebenfalls möglich ist das Deponieren der Mikroplatte 8 auf einer Übergabestation 37 (vgl. Fig. 11), von wo sie mit dem bereits beschriebenen Roboter 18 oder einem anderen zu diesem Zweck geeigneten Werkzeug eines anderen Laborgeräts weggenommen werden kann.

Bevorzugt ist auch ein Messverfahren, bei dem, zwischen dem Abheben des Mikroplattendeckels 7 von der auf der Mikroplattenauflage 4 positionierten Mikroplatte 8 gemäss Schritt c) und dem optischen Ausmessen der Mikroplatte 8 mit abgehobenem Mikroplattendeckel 7 mit der mindestens einen optischen Mess-/Detektions-Einrichtung 2 gemäss Schritt d), die Proben in den Wells 25 der Mikroplatte 8 mit Luft und/oder mit einem Reagens zum Auslösen von Lumineszenz oder anderen Reaktionen kontaktiert werden.

Das erfindungsgemässe Abheben und Wiederaufsetzen des Mikroplattendeckels 7 im Inneren des Mikroplatten-Readers 1 - allenfalls in Kombination mit einem als Klimakammer ausgelegten Probenraum im Inneren des Mikroplatten-Readers 1 - ermöglicht das Durchführen von Langzeitversuchen und das Beobachten der Langzeitkinetik (z.B. Wachstum) von Zellkulturen in den Wells 25 von Mikroplatten 8. Die sporadisch und wiederholt durchzuführenden optischen Messungen an den Proben werden durch ein kurzzeitiges Abheben und Wiederaufsetzen des Mikroplattendeckels 7 ermöglicht. Ebenso wird das Zugeben von Nährmedium oder anderen Substanzen und Agenzien zu den Zellkulturen in den Wells 25 von Mikroplatten 8 durch ein kurzzeitiges Abheben und Wiederaufsetzen des Mikroplattendeckels 7 ermöglicht. Derartige Langzeitversuche werden vorzugsweise in Standalone Mikroplatten-Readern 1 durchgeführt.

Wie in den Figuren 1 bis 8 gezeigt wird beim beschriebenen Messverfahren bevorzugt, dass der Mikroplattendeckel 7 nach dem optischen Ausmessen der Mikroplatte 8 unter Verwendung der Deckelhaltevorrichtung 6 innerhalb des Gehäuses 3 des Mikroplatten-Readers 1 auf die Mikroplatte 8 gelegt und die Mikroplattenauflage 4 und die abgedeckte Mikroplatte 8 mit der Bewegungseinheit 5 aus dem Gehäuse 3 des Mikroplatten-Readers 1 befördert wird.

Die Figur 9 zeigt Aufsichten auf mit selbstklebender Eisenfolie 12 modifizierte Standard-Mikroplattendeckel 7. Wegen des Verwendens eines Arrays von Dauermagneten 9 kann das magnetisierbare Material 12 fast beliebig geformt sein und auch fast beliebig angeordnet werden. Die in den Figuren 9A, 9B, 9C, und 9D gezeigten Beispiele des Anbringens einer selbstklebenden Eisenfolie 12 resultierten alle ohne Ausnahme in einem einwandfreien Abheben und Wiederaufsetzen des Mikroplattendeckels 7. Dabei wurden:
- zwei schmale, querliegende und extrem positionierte Streifen 12 auf den Deckel 7 für eine 96-Well Mikroplatte geklebt (vgl. Fig. 9A);
- zwei willkürlich platzierte, zumindest annähernd dreieckige Stücke 12 auf dem Deckel für eine 24-Well Mikroplatte geklebt (vgl. Fig. 9B);
- zwei willkürlich zwischen den Wells platzierte, zumindest annähernd quadratische Stücke 12 auf dem Deckel 7 für eine 6-Well Mikroplatte geklebt (vgl. Fig. 9C);
- zwei Alternativen von zumindest annähernd rechteckigen Stücken 12 auf dem Deckel 7 für eine beliebige Standard-Mikroplatte geklebt (vgl. Fig. 9D).

Die Verwendung eines derartigen Arrays von Dauermagneten 9 löst das Problem des spontanen Verschiebens des Mikroplattendeckels 7 beim Abheben von der Mikroplatte 8. Ein solches Verschieben kann sich insbesondere dann ergeben, wenn der Magnetheber 6' der Deckelhaltevorrichtung 6 mit nur einem einzigen Dauermagneten oder Elektromagneten bestückt ist, wenn dieser Magnet eine wesentlich kleinere Fläche aufweist als der aufzunehmende Mikroplattendeckel 7, und wenn das magnetisierbare Material 12 auf oder im Mikroplattendeckel 7 eine ähnliche Fläche wie der Magnet aufweist, jedoch in der Projektion versetzt zum Magneten angeordnet ist. Nähert sich in einem solchen Fall die Deckelhaltevorrichtung 6 mit dem Magnetheber 6' dem abzuhebenden Mikroplattendeckel 7, so wird dieser Mikroplattendeckel 7 dem horizontalen Versatz des magnetisierbaren Materials 12 gegenüber dem Einzelmagneten des Magnethebers 6' entsprechend eine spontane horizontale Verschiebung erfahren. Selbstverständlich kann ein derart verschobener Mikroplattendeckel 7 automatisiert nicht mehr korrekt auf die Mikroplatte 8 zurückgelegt werden. Dieses Verschiebeproblem kann einerseits dadurch gelöst werden, dass (wie gezeigt) anstelle des Einzelmagneten ein Array von Dauermagneten 9 verwendet wird. Andererseits kann dieses Verschiebeproblem dadurch gelöst werden, dass der Einzelmagnet des Magnethebers 6' und das Magnetisierbare Material 12 exakt in Projektion übereinander montiert werden.

Eine weitere Möglichkeit dieses Verschiebeproblem zu lösen besteht darin, dass die Deckelhaltevorrichtung 6 anstelle eines Magnethebers 6' eine Platte aus einem magnetisierbaren Material (z.B. aus Eisen, Nickel oder Kobalt bzw. aus einer zumindest eines dieser Metalle umfassenden Metall Legierung) aufweist, wobei diese Platte vorzugsweise eine Oberfläche aufweist, die grösser ist als die Oberfläche des aufzunehmenden Mikroplattendeckels 7 (nicht gezeigt). Es genügt dann beispielsweise das Befestigen eines Magnetmaterials (z.B. einer Magnetfolie oder eines einzelnen Dauermagneten) auf dem Mikroplattendeckel (nicht gezeigt). Ebenso kann die Deckelhaltevorrichtung 6 ein magnetisierbares Material 12 umfassen, das ausgewählt ist aus einer Gruppe, die selbstklebende Metallfolien, aufgebrachte metallische Lacke, eingeformte metallische Splitter oder Körner sowie mit Kunststoffen umformte oder hinterspritzte Metallplatten oder Metallfolien umfasst.

Die Figur 10 zeigt eine 3D-Ansicht der Bewegungseinheit 5 mit einer auf der Mikroplattenauflage 4 positionierten Mikroplatte 8 mit aufgesetztem Mikroplattendeckel 7 mit Seitenflächen 16 und einem magnetisierbaren Material 12. Das kartesische Koordinatensystem ist durch die drei Pfeile (X, Y und Z) angegeben. Die Bewegungseinheit 5 umfasst zwei parallele Führungsstangen 27 auf denen je ein Gleitlager 30 beweglich angeordnet ist. Diese zwei Gleitlager 30 sind über einen Wagen 36 miteinander verbunden. Ein erster Motor 26 bewegt diesen Wagen 36 in einer X-Richtung eines kartesischen Koordinatensystems mit einem über eine erste Umlenkrolle 29 geführten ersten Zahnriemen. Die Mikroplattenauflage 4 ist an diesem Wagen 36 mittels einer Kulisse 33 befestigt, wobei diese Kulisse 33 entlang einer Linearführung 32 und entlang des Wagens 36 beweglich geführt ist. Ein zweiter Motor 31 bewegt die Kulisse 33 mit der Mikroplattenauflage 4 in einer Y-Richtung des kartesischen Koordinatensystems mittels eines über eine zweite Umlenkrolle 35 geführten zweiten Zahnriemens 34. Die soeben beschriebene Bewegungseinrichtung 5 ist vorzugsweise einer Z-Richtung des kartesischen Koordinatensystems bewegbar (nicht gezeigt in Fig. 10).

Die Figur 10 zeigt zudem eine Deckelhaltevorrichtung 6 mit einem Magnetheber 6', der als hier nicht beanspruchte Alternative einen einzelnen, schaltbaren Permanentmagneten 11 umfasst. Schaltbare Permanentmagneten sind aus dem Stand der Technik bekannt (vgl. z.B. EP 0 114 259 B1) und werden von einem Fachmann in Kenntnis der hier vorliegenden Erfindung in ihrer Konstruktion und Anordnung den Anforderungen zum Anheben eines Mikroplattendeckels 7 angepasst.

An Stelle der Deckelhaltevorrichtung 6 mit einem Magnetheber 6' könnte ein Fachmann in Kenntnis der vorliegenden Erfindung ohne weiteres eine nicht erfindungsgemässe Deckelhaltevorrichtung 6 vorsehen, die als Saugnapfheber 6" oder als Greifer 6'" ausgebildet ist, wobei er eine allenfalls benötigte Hebe- und Senk-Bewegung der Deckelhaltevorrichtung 6 mit den Bewegungen der Bewegungseinheit 5 zum Ausführen von Bewegungen der Mikroplattenauflage 4 in den X-, Y, und Z-Richtungen eines kartesischen Koordinatensystems koordinieren würde.

Die Figur 11 zeigt eine leicht vergrösserte 3D-Ansicht der leeren Mikroplattenauflage 4 der Bewegungseinheit 5 (entsprechend der Fig. 10) bei einer Übergabestation 37 und in der entsprechenden Vergrösserung eine 3D-Ansicht einer 96-Well Mikroplatte 8 ohne Mikroplattendeckel 7. Die Übergabestation 37 umfasst eine Tragplatte 38 mit einer der Mikroplattenauflage 4 angepassten Form, wobei die Mikroplattenauflage 4 Ausschnitte 39 aufweist, die über den Footprint 40 einer Standard-Mikroplatte 8 hinausgehen, so dass Teile der Tragplatte 38, die in diese Ausschnitte 39 hineinreichen zum Tragen der Mikroplatte 8 genügen.

Zur Aufnahme einer Mikroplatte 4 bei der Übergabestation 37 wird die Mikroplattenaufnahme 4 der Bewegungseinheit 5 in einem Z-Niveau ausgefahren das unterhalb des Niveaus der Tragplatte 38 der Übergabestation 37 und somit auch unterhalb des Footprints 40 der Mikroplatte 8 auf dieser Tragplatte 38 liegt. Nach dem Einnehmen einer korrekten Übernahmeposition wird die Mikroplattenaufnahme 4 in Z-Richtung angehoben, bis die Mikroplatte 8 auf der Mikroplattenaufnahme 4 liegt. Zugleich ermöglicht der grosse Ausschnitt 39 in der Tragplatte 38 (ganz unten in der Figur 11) das Anfahren der Übergabestation 37 auf einem tieferen Niveau als die Oberfläche der Tragplatte, falls diese Tragplatte 38 durch einen zentralen Pfosten (nicht gezeigt) auf einer Arbeitsfläche einer Laborarbeitsstation (nicht gezeigt) abgestützt sein sollte.

Zur Abgabe einer Mikroplatte 4 bei der Übergabestation 37 wird die Mikroplattenaufnahme 4 der Bewegungseinheit 5 in einem Z-Niveau ausgefahren das über dem Niveau der Tragplatte 38 der Übergabestation 37 liegt. Nach dem Einnehmen einer korrekten Übergabeposition wird die Mikroplattenaufnahme 4 in Z-Richtung abgesenkt bis die Mikroplatte 8 auf der Tragplatte 38 der Übergabestation 37 liegt.

Gleiche Bezugszeichen in den Figuren bezeichnen gleiche oder zumindest ähnliche Merkmale, auch wenn diese nicht in jedem Fall ausführlich beschrieben sind.

**Bezugszeichenliste**

| | | | |
|---|---|---|---|
| 1 | Mikroplatten-Reader | 22 | biegeelastische, biegeschlaffe Elemente |
| 2 | optische Mess-/Detektions-Einrichtung, Messkopf | | |
| | | 23 | optische Achse |
| 2' | Detektionsoptik | 24 | Detektionsachse |
| 2" | erste Anregungsoptik | 25 | Well von 8 |
| 2" | zweite Anregungsoptik | 26 | erster Motor |
| 3 | Gehäuse | 27 | Führungsstange |
| 4 | Mikroplattenauflage | 28 | erster Zahnriemen |
| 5 | Bewegungseinheit | 29 | erste Umlenkrolle |
| 6 | Deckelhaltevorrichtung | 30 | Gleitlager |
| 6' | Magnetheber | 31 | zweiter Motor |
| 6" | Saugnapfheber | 32 | Linearführung |
| 6"' | Greifer | 33 | Kulisse |
| 7 | Mikroplattendeckel | 34 | zweiter Zahnriemen |
| 8 | Mikroplatte | 35 | zweite Umlenkrolle |
| 9 | Array von Dauermagneten | 36 | Wagen |
| 11 | einzelner, schaltbarer Permanentmagnet | 37 | Übergabestation |
| | | 38 | Tragplatte von 37 |
| 12 | magnetisierbares Material | 39 | Ausschnitte von 38 |
| 13 | Unterdruckquelle | 40 | Footprint von 4 |
| 14 | Saugnapf | | |
| 15 | Greiferfinger von 6"' | | |
| 16 | Seitenflächen von 7 | L | Lichtquelle |
| 17 | Tragvorrichtung | | |
| 18 | Roboter | | |
| 19 | Greiferfinger von 18 | | |
| 20 | Türe | | |
| 21 | Steuerung | | |

## Patentansprüche

1. Mikroplatten-Reader (1) mit mindestens einer optischen Mess-/Detektions-Einrichtung (2), wobei der Mikroplatten-Reader (1) zudem ein Gehäuse (3), eine Mikroplattenauflage (4) und eine Bewegungseinheit (5) umfasst, und wobei die Bewegungseinheit (5) zum Bewegen der Mikroplattenauflage (4) innerhalb des Gehäuses (3) in zumindest einer im Wesentlichen horizontalen Richtung ausgebildet ist, wobei der Mikroplatten-Reader (1) eine integrierte, innerhalb des Gehäuses (3) angeordnete Deckelhaltevorrichtung (6) zum Abheben eines Mikroplattendeckels (7) von einer auf der Mikroplattenauflage (4) positionierten Mikroplatte (8) und zum Auflegen eines Mikroplattendeckels (7) auf eine Mikroplatte (8) umfasst, wobei diese Deckelhaltevorrichtung (6) zur Bewegung des Mikroplattendeckels (7) und/oder die Mikroplattenauflage (4) zur Bewegung der Mikroplatte (8) in jeweils einer zumindest annähernd vertikalen Richtung ausgebildet sind, **dadurch gekennzeichnet, dass** die Bewegungseinheit (5) zum Bewegen der Mikroplattenauflage (4) aus dem Gehäuse (3) heraus und in das Gehäuse (3) hinein in zumindest einer im Wesentlichen horizontalen Richtung ausgebildet ist, und dass die Deckelhaltevorrichtung (6) als Magnetheber (6') ausgebildet ist und ein Array von Dauermagneten (9) oder ein elektromagnetisches Array umfasst, wobei jeder anzuhebende und aufzusetzende Mikroplattendeckel (7) magnetisierbares Material (12) umfasst.

2. Mikroplatten-Reader (1) nach Anspruch 1, **dadurch gekennzeichnet, dass** die Deckelhaltevorrichtung (6) zum Abheben eines Mikroplattendeckels (7) von einer auf der Mikroplattenauflage (4) positionierten Mikroplatte (8), zum Halten dieses Mikroplattendeckels (7) während dem optischen Ausmessen der Mikroplatte (8) und zum Auflegen desselben Mikroplattendeckels (7) auf dieselbe Mikroplatte (8) ausgebildet ist.

3. Mikroplatten-Reader (1) nach einem der Ansprüche 1 oder 2, **dadurch gekennzeichnet, dass** das magnetisierbare Material (12) ausgewählt ist aus einer Gruppe, die selbstklebende Metallfolien, aufgebrachte metallische Lacke, eingeformte metallische Splitter oder Körner sowie mit Kunststoffen umformte oder hinterspritzte Metallplatten oder Metallfolien umfasst, wobei die Metalle ausgewählt sind aus der Gruppe, die Eisen, Nickel, Kobalt und deren Legierungen sowie Legierungen dieser Metalle mit nichtmagnetisierbaren Metallen umfasst.

4. Mikroplatten-Reader (1) nach Anspruch 1 oder 2, **dadurch gekennzeichnet, dass** die Deckelhaltevorrichtung (6) mit biegeelastischen oder biegeschlaffen Elementen (22) an einer Tragvorrichtung (17) befestigt ist.

5. Mikroplatten-Reader (1) nach einem der vorhergehenden Ansprüche, **dadurch gekennzeichnet, dass** die optische Mess-/Detektions-Einrichtung (2) ortstreu unbeweglich angeordnet ist.

6. Mikroplatten-Reader (1) nach einem der vorhergehenden Ansprüche, **dadurch gekennzeichnet, dass** die Deckelhaltevorrichtung (6) zum Ausführen einer Hebe- und Senk-Bewegung ausgebildet ist.

7. Mikroplatten-Reader (1) nach einem der Ansprüche 1 bis 5, **dadurch gekennzeichnet, dass** die Deckelhaltevorrichtung (6) ortstreu unbeweglich angeordnet ausgebildet ist.

8. Mikroplatten-Reader (1) nach einem der vorhergehenden Ansprüche, **dadurch gekennzeichnet, dass** die Bewegungseinheit (5) zum Ausführen von Bewegungen der Mikroplattenauflage (4) in den X-, Y, und Z-Richtungen eines kartesischen Koordinatensystems ausgebildet ist.

9. Verfahren zum optischen Ausmessen von Proben in Wells (25) einer mit einem Mikroplattendeckel (7) versehenen Mikroplatte (8) in einem Mikroplatten-Reader (1), der mindestens eine optische Mess-/Detektions-Einrichtung (2), ein Gehäuse (3), eine Mikroplattenauflage (4) und eine Bewegungseinheit (5) umfasst, wobei die Bewegungseinheit (5) zum Bewegen der Mikroplattenauflage (4) innerhalb des Gehäuses (3) in zumindest einer im Wesentlichen horizontalen Richtung ausgebildet ist, wobei der Mikroplatten-Reader (1) eine integrierte, innerhalb des Gehäuses (3) angeordnete Deckelhaltevorrichtung (6) zum Abheben eines Mikroplattendeckels (7) von einer auf der Mikroplattenauflage (4) positionierten Mikroplatte (8) und zum Auflegen eines Mikroplattendeckels (7) auf eine Mikroplatte (8) umfasst, wobei diese Deckelhaltevorrichtung (6) zur Bewegung des Mikroplattendeckels (7) und/oder die Mikroplattenauflage (4) zur Bewegung der Mikroplatte (8) in jeweils einer zumindest annähernd vertikalen Richtung ausgebildet sind, wobei die Bewegungseinheit (5) zum Bewegen der Mikroplattenauflage (4) aus dem Gehäuse (3) heraus und in das Gehäuse (3) hinein in zumindest einer im Wesentlichen horizontalen Richtung ausgebildet ist, wobei die Deckelhaltevorrichtung (6) als Magnetheber (6') ausgebildet ist und ein Array von Dauermagneten (9) oder ein elektromagnetisches Array umfasst, und wobei jeder anzuhebende und aufzusetzende Mikroplattendeckel (7) magnetisierbares Material (12) umfasst, **dadurch gekennzeichnet, dass** das Messverfahren die folgenden Schritte umfasst:
(a) Platzieren einer mit einem Mikroplattendeckel (7) abgedeckten Mikroplatte (8) auf der Mikroplattenauflage (4) des Mikroplatten-Readers (1);
(b) Einziehen der Mikroplattenauflage (4) und der abgedeckten Mikroplatte (8) mit der Bewegungseinheit (5) in das Gehäuse (3) des Mikroplatten-Readers (1);
(c) Abheben des Mikroplattendeckels (7) von der auf der Mikroplattenauflage (4) positionierten Mikroplatte (8) mit der Deckelhaltevorrichtung (6);
(d) Ausmessen der Mikroplatte (8) mit abgehobenem Mikroplattendeckel (7) mit der mindestens einen optischen Mess-/Detektions-Einrichtung (2);
(e) Wiederauflegen des Mikroplattendeckels (7) auf der auf der Mikroplattenauflage (4) positionierten Mikroplatte (8) unter Verwendung der im Mikroplatten-Reader (1) integrierten Deckelhaltevorrichtung (6); und
(f) Ausfahren der Mikroplattenauflage (4) und der abgedeckten Mikroplatte (8) mit der Bewegungseinheit (5) aus dem Gehäuse (3) des Mikroplatten-Readers (1).

10. Messverfahren nach Anspruch 9, **dadurch gekennzeichnet, dass** der Mikroplattendeckel (7) während dem optischen Ausmessen von Proben in Wells (25) der Mikroplatte (8) mit der Deckelhaltevorrichtung (6) innerhalb des Gehäuses (3) des Mikroplatten-Readers (1) gehalten oder im Gehäuse (3) abgelegt wird.

11. Messverfahren nach einem der Ansprüche 9 oder 10, **dadurch gekennzeichnet, dass** zwischen dem Abheben des Mikroplattendeckels (7) von der auf der Mikroplattenauflage (4) positionierten Mikroplatte (8) gemäss Schritt (c) und dem optischen Ausmessen von Proben in Wells (25) der Mikroplatte (8) mit nun abgehobenem Mikroplattendeckel (7) mit der mindestens einen optischen Mess-/Detektions-Einrichtung (2) gemäss Schritt (d) die Proben in den Wells (25) der Mikroplatte (8) mit Luft und/oder mit einem Reagens zum Auslösen von Lumineszenz oder anderen Reaktionen kontaktiert werden.

12. Messverfahren nach einem der Ansprüche 9 bis 11, **dadurch gekennzeichnet, dass** der Mikroplattendeckel (7) zum optischen Ausmessen von Proben in Wells (25) der Mikroplatte (8) während eines Langzeitversuchs mehrmals abgehoben und wieder aufgesetzt wird.

## Claims

1. A microplate reader (1) having at least one optical measurement/detection unit (2), wherein the microplate reader (1) additionally comprises a housing (3), a microplate support (4), and a movement unit (5), and wherein the movement unit (5) is designed to move the microplate support (4) inside the housing (3) in at least one essentially horizontal direction, wherein the microplate reader (1) comprises an integrated cover holding device (6), which is arranged inside the housing (3), for lifting a microplate cover (7) from a microplate (8) positioned on the microplate support (4) and for depositing a microplate cover (7) on a microplate (8), wherein this cover holding device (6) is designed for moving the microplate cover (7) and/or the microplate support (4) is designed for moving the microplate (8) in at least one approximately vertical direction in each case, **characterized in that** the movement unit (5) is designed for moving the microplate support (4) out of the housing (3) and into the housing (3) in at least one essentially horizontal direction, and that the cover holding device (6) is designed as a magnetic lifter (6') and comprises an array of permanent magnets (9) or an electromagnetic array, wherein each microplate cover (7) to be lifted and deposited comprises magnetizable material (12).

2. The microplate reader (1) according to Claim 1, **characterized in that** the cover holding device (6) is designed for lifting a microplate cover (7) from a microplate (8) positioned on the microplate support (4), for holding this microplate cover (7) during the optical measurement of the microplate (8), and for depositing the same microplate cover (7) on the same microplate (8).

3. The microplate reader (1) according to any one of Claims 1 or 2, **characterized in that** the magnetizable material (12) is selected from a group which comprises self-adhesive metal foils, applied metallic lacquers, molded-in metallic slivers or grains, and metal plates or metal foils formed or back-injected using plastics, wherein the metals are selected from the group which comprises iron, nickel, cobalt, and the alloys thereof and also alloys of these metals with non-magnetizable metals.

4. The microplate reader (1) according to Claim 1 or 2, **characterized in that** the cover holding device (6) is fastened using elastic or limp elements (22) on a support device (17).

5. The microplate reader (1) according to any one of the preceding claims, **characterized in that** the optical measurement/detection unit (2) is arranged stationary in a fixed manner.

6. The microplate reader (1) according to any one of the preceding claims, **characterized in that** the cover holding device (6) is designed to execute a lifting and lowering movement.

7. The microplate reader (1) according to any one of Claims 1 to 5, **characterized in that** the cover holding device (6) is designed as arranged as stationary in a fixed manner.

8. The microplate reader (1) according to any one of the preceding claims, **characterized in that** the movement unit (5) is designed for executing movements of the microplate support (4) in the X, Y, and Z directions of a Cartesian coordinate system.

9. A method for optically measuring samples in wells (25) of a microplate (8), which is provided with a microplate cover (7), in a microplate reader (1), which comprises at least one optical measurement/detection unit (2), a housing (3), a microplate support (4), and a movement unit (5), wherein the movement unit (5) is designed for moving the microplate support (4) inside the housing (3) in at least one essentially horizontal direction, wherein the microplate reader (1) comprises an integrated cover holding device (6), which is arranged inside the housing (3), for lifting a microplate cover (7), from a microplate (8) positioned on the microplate support (4) and for depositing a microplate cover (7) on a microplate (8), wherein this cover holding device (6) is designed for moving the microplate cover (7) and/or the microplate support (4) is designed for moving the microplate (8) in at least one approximately vertical direction in each case, wherein the movement unit (5) is designed for moving the microplate support (4) out of the housing (3) and into the housing (3) in at least one essentially horizontal direction, wherein the cover holding device (6) is designed as a magnetic lifter (6') and comprises an array of permanent magnets (9) or an electromagnetic array, and wherein each microplate cover (7) to be lifted and deposited comprises magnetizable material (12), **characterized in that** the measurement method comprises the following steps:
(a) placing a microplate (8), which is covered using a microplate cover (7), on the microplate support (4) of the microplate reader (1);
(b) drawing the microplate support (4) and the covered microplate (8) using the movement unit (5) into the housing (3) of the microplate reader (1);
(c) lifting the microplate cover (7) from the microplate (8) positioned on the microplate support (4) using the cover holding device (6);
(d) measuring the microplate (8) having lifted microplate cover (7) using the at least one optical measurement/detection unit (2);
(e) replacing the microplate cover (7) on the microplate (8) positioned on the microplate support (4) while using the cover holding device (6) integrated into the microplate reader (1); and
(f) extending the microplate support (4) and the covered microplate (8) using the movement unit (5) out of the housing (3) of the microplate reader (1).

10. The measurement method according to Claim 9, **characterized in that** the microplate cover (7), during the optical measurement of samples in wells (25) of the microplate (8), is held using the cover holding device (6) inside the housing (3) of the microplate reader (1) or is deposited in the housing (3).

11. The measurement method according to any one of Claims 9 or 10, **characterized in that**, between the lifting of the microplate cover (7) from the microplate (8) positioned on the microplate support (4) according to step (c) and the optical measurement of samples in wells (25) of the microplate (8) having lifted microplate cover (7) using the at least one optical measurement/detection unit (2) according to step (d), the samples in the wells (25) of the microplate (8) are contacted using air and/or using a reagent for triggering luminescence or other reactions.

12. The measurement method according to any one of Claims 9 to 11, **characterized in that** the microplate cover (7) is lifted and replaced multiple times during a long-term experiment for the optical measurement of samples in wells (25) of the microplate (8).

## Revendications

1. Lecteur de microplaques (1) comprenant au moins un dispositif de mesure/détection optique (2), le lecteur de microplaques (1) comprenant en outre un boîtier (3), un support de microplaques (4) et une unité de déplacement (5), l'unité de déplacement (5) étant réalisée pour déplacer le support de microplaques (4) à l'intérieur du boîtier (3) dans au moins une direction essentiellement horizontale, le lecteur de microplaques (1) comprenant un dispositif de retenue de couvercle (6) intégré agencé à l'intérieur du boîtier (3) pour soulever un couvercle de microplaque (7) d'une microplaque (8) positionnée sur le support de microplaques (4) et pour reposer un couvercle de microplaque (7) sur une microplaque (8), ce dispositif de retenue de couvercle (6) étant conçu pour déplacer le couvercle de microplaque (7) et/ou le support de microplaques (4) étant conçu pour déplacer la microplaque (8) chacun dans une direction au moins approximativement verticale, **caractérisé en ce que** l'unité de déplacement (5) est réalisée pour sortir le support de microplaques (4) du boîtier (3) et le rentrer dans le boîtier (3) dans une direction essentiellement horizontale, et **en ce que** le dispositif de retenue de couvercle (6) est réalisé sous la forme d'un dispositif de levage magnétique (6') et **en ce qu'**il comprend un système d'aimants permanents (9) ou un système électromagnétique, chaque couvercle de microplaque (7) à soulever et à reposer comprenant un matériau magnétisable (12).

2. Lecteur de microplaques (1) selon la revendication 1, **caractérisé en ce que** le dispositif de retenue de couvercle (6) est conçu pour soulever un couvercle de microplaque (7) d'une microplaque (8) positionnée sur le support de microplaques (4), pour maintenir ce couvercle de microplaque (7) pendant la mesure optique de la microplaque (8) et pour reposer ce même couvercle de microplaque (7) sur cette même microplaque (8).

3. Lecteur de microplaques (1) selon l'une des revendications 1 ou 2, **caractérisé en ce que** le matériau magnétisable (12) est choisi à partir d'un groupe comprenant des feuilles métalliques autoadhésives, une application de peinture métallique, des éclats ou des grains métalliques moulés ainsi que des plaques ou feuilles métalliques transformées avec des matières plastiques ou moulées par injection, les métaux étant choisis à partir du groupe comprenant le fer, le nickel, le cobalt et des alliages de ces derniers ainsi que des alliages de ces métaux avec des métaux non magnétisables.

4. Lecteur de microplaques (1) selon la revendication 1 ou 2, **caractérisé en ce que** le dispositif de retenue de couvercle (6) est fixé à un dispositif de support (17) à l'aide d'éléments flexibles ou souples (22).

5. Lecteur de microplaques (1) selon l'une des revendications précédentes, **caractérisé en ce que** le dispositif de mesure/détection optique (2) est agencé fixe.

6. Lecteur de microplaques (1) selon l'une des revendications précédentes, **caractérisé en ce que** le dispositif de retenue de couvercle (6) est réalisé pour effectuer un mouvement de levage et d'abaissement.

7. Lecteur de microplaques (1) selon l'une des revendications 1 à 5, **caractérisé en ce que** le dispositif de retenue de couvercle (6) est réalisé fixe.

8. Lecteur de microplaques (1) selon l'une des revendications précédentes, **caractérisé en ce que** l'unité de déplacement (5) est réalisée pour déplacer le support de microplaques (4) dans les directions X, Y et Z d'un système de coordonnées cartésien.

9. Procédé pour effectuer des mesures optiques d'échantillons dans les puits (25) d'une microplaque (8) pourvue d'un couvercle de microplaque (7) dans un lecteur de microplaques (1) qui comprend au moins un dispositif de mesure/détection optique (2), un boîtier (3), un support de microplaques (4) et une unité de déplacement (5), l'unité de déplacement (5) étant conçue pour déplacer le support de microplaques (4) à l'intérieur du boîtier (3) dans au moins une direction essentiellement horizontale, le lecteur de microplaques (1) comprenant un dispositif de retenue de couvercle (6) intégré agencé à l'intérieur du boîtier (3) pour soulever un couvercle de microplaque (7) d'une microplaque (8) positionnée sur le support de microplaques (4) et pour reposer un couvercle de microplaque (7) sur une microplaque (8), ce dispositif de retenue de couvercle (6) étant conçu pour déplacer le couvercle de microplaque (7) et/ou le support de microplaques (4) étant conçu pour déplacer la microplaque (8) chacun dans une direction au moins approximativement verticale, l'unité de déplacement (5) étant réalisée pour sortir le support de microplaques (4) en-dehors du boîtier (3) et pour le rentrer dans le boîtier (3) dans une direction essentiellement horizontale, le dispositif de retenue de couvercle (6) étant réalisé sous la forme d'un dispositif de levage magnétique (6') et comprenant un système d'aimants permanents (9) ou un système électromagnétique, chaque couvercle de microplaque (7) à lever et à reposer comprenant un matériau magnétisable (12), **caractérisé en ce que** le procédé de mesure comprend les étapes consistant à :
(a) placer une microplaque (8) recouverte d'un couvercle de microplaque (7) sur le support de microplaques (4) du lecteur de microplaques (1) ;
(b) faire rentrer le support de microplaques (4) et la microplaque recouverte (8) à l'aide de l'unité de déplacement (5) dans le boîtier (3) du lecteur de microplaques (1) ;
(c) soulever le couvercle de microplaque (7) de la microplaque (8) positionnée sur le support de microplaques (4) avec le dispositif de retenue de couvercle (6) ;
(d) mesurer la microplaque (8) avec le couvercle de microplaque (7) soulevé à l'aide du au moins un dispositif de mesure/détection optique (2) ;
(e) reposer le couvercle de microplaque (7) sur la microplaque (8) positionnée sur le support de microplaques (4) en utilisant le dispositif de retenue de couvercle (6) intégré dans le lecteur de microplaques (1) ; et
(f) sortir le support de microplaques (4) et la microplaque recouverte (8) à l'aide de l'unité de déplacement (5) en-dehors du boîtier (3) du lecteur de microplaques (1).

10. Procédé de mesure selon la revendication 9, **caractérisé en ce que** le couvercle de microplaque (7) pendant la mesure optique des échantillons dans les puits (25) de la microplaque (8) avec le dispositif de retenue de couvercle (6) est maintenu à l'intérieur du boîtier (3) du lecteur de microplaques (1) ou est déposé dans le boîtier (3).

11. Procédé de mesure selon l'une des revendications 9 ou 10, **caractérisé en ce que** entre l'étape consistant à soulever le couvercle de microplaque (7) de la microplaque (8) positionnée sur le support de microplaques (4) conformément à l'étape (c) et l'étape consistant à effectuer une mesure optique des échantillons dans les puits (25) de la microplaque (8) avec le couvercle de microplaque (7) soulevé avec le au moins un dispositif de mesure/détection optique (2) conformément à l'étape (d), les échantillons dans les puits (25) de la microplaque (8) sont mis en contact avec de l'air et/ou avec un autre réactif pour déclencher une luminescence ou autres réactions.

12. Procédé de mesure selon l'une des revendications 9 à 11, **caractérisé en ce que** le couvercle de microplaque (7) pour effectuer des mesures optiques sur les échantillons dans les puits (25) de la microplaque (8) pendant un essai de longue durée est soulevé et reposé plusieurs fois.
